# EUROPEAN PATENT APPLICATION

(11) **EP 4 057 424 A1**
(43) Date of publication of application: **14.09.2022**
(21) Application number: 22161177.5
(22) Date of filing: 09.03.2022
(51) Int. Cl.: H01M 10/625, H01M 10/658, H01M 50/209, H01M 50/289, H01M 50/271, H01M 50/383, H01M 50/367

(54) **TRACTION BATTERY PACK WITH HEAT-INSULATING ASSEMBLY**

(30) Priority: 11.03.2021 CN 202110266400
(71) Applicant: Nio Technology (Anhui) Co., Ltd, Hefei City, Anhui 230611 (CN)
(72) Inventor: ZHU, Lide, Hefei City, Anhui, 230611 (CN); WANG, Linfeng, Hefei City, Anhui, 230611 (CN); JIANG, Yaping, Hefei City, Anhui, 230611 (CN); XIE, Xuejian, Hefei City, Anhui, 230611 (CN); WANG, Xianpeng, Hefei City, Anhui, 230611 (CN); FANG, Jie, Hefei City, Anhui, 230611 (CN); TZENG, Shizhe, Hefei City, Anhui, 230611 (CN)
(74) Representative: Vossius & Partner Patentanwälte Rechtsanwälte mbB

(57) **Abstract**

The invention relates to a traction battery pack, comprising at least one battery pack assembly each comprising: a battery module array, which comprises a plurality of battery modules arranged in an arrangement direction, each of the battery modules comprising a plurality of cells, cell heat-insulating elements being arranged between adjacent cells, and module heat-insulating elements being arranged on two sides of each of the battery modules in the arrangement direction; a top assembly and a bottom assembly located at the top and bottom of the plurality of battery modules, respectively; side beams arranged on two sides of the battery module array respectively in a direction perpendicular to the arrangement direction, the side beams extending substantially parallel to the arrangement direction; and a smoke discharge channel, which communicates with the outside through a valve, the valve being capable of discharging a gas in the smoke discharge channel to the outside under a set condition. The top assembly, the bottom assembly and the side beams are arranged to enclose each of the battery modules in one module sub-compartment. At least one of the side beams is provided with exhaust ports each communicating with the smoke discharge channel and a respective module sub-compartment.

## Description

### Technical Field

The invention relates to the technical field of vehicles, and in particular, to a traction battery pack for a new energy vehicle.

### Background Art

With rapid development of the new energy vehicle market and a blowout market demand, upstream and downstream industrial chains of new energy vehicles are showing a rapid growth trend. As one of three core components of the new energy vehicles, traction batteries have attracted more and more attention because of their relatively high technical complexity, high cost ratio and high safety requirements.

With the increase of battery energy density, safety risks of traction batteries show a rising trend, and most of these safety risks are caused by thermal runaway of cells. When thermal runaway occurs to a single cell, the temperature rise caused by exothermic chain reaction leads to thermal diffusion, thereby causing the temperature of other cells to be uncontrollable. In addition, a high-temperature gas emitted during thermal runaway of the cell will heat surrounding cells, thereby accelerating the process of thermal diffusion. At present, in the latest safety regulations for batteries for electric vehicles, requirements for thermal diffusion of traction batteries have been added, but a thermal runaway protection structure in the existing battery pack can hardly meet the requirements.

Therefore, there is need in the art for a novel traction battery pack to solve at least one of the foregoing problems existing in the prior art.

### Summary of the Invention

In view of this, an embodiment of the invention provides a novel traction battery pack with a heat-insulating assembly, for effectively solving or alleviating at least one of the disadvantages existing at present.

An aspect of an embodiment of the invention relates to a traction battery pack, comprising at least one battery pack assembly each comprising:
a battery module array, which comprises a plurality of battery modules arranged in a module arrangement direction, each of the battery modules comprising a plurality of cells, cell heat-insulating elements being arranged between adjacent cells of the plurality of cells, and module heat-insulating elements being arranged on two sides of each of the battery modules in the module arrangement direction;
a top assembly and a bottom assembly located at the top and bottom of the plurality of battery modules, respectively;
side beams arranged on two sides of the battery module array respectively in a direction perpendicular to the module arrangement direction, the side beams extending substantially parallel to the module arrangement direction; and
a smoke discharge channel, which communicates with the outside of the traction battery pack through a valve, the valve being capable of discharging a gas in the smoke discharge channel to the outside under a set condition,
wherein the module heat-insulating elements, the top assembly, the bottom assembly and the side beams are arranged to enclose each of the battery modules in one module sub-compartment, and at least one of the side beams is provided with exhaust ports each communicating with the smoke discharge channel and a respective module sub-compartment.

In the traction battery pack according to the embodiment of the invention, optionally, a backflow prevention element is arranged in the exhaust port, and is configured to allow a gas in a module sub-compartment in which thermal runaway occurs to be discharged to the smoke discharge channel, and to prevent the gas in the smoke discharge channel from flowing back to a module sub-compartment in which thermal runaway does not occur.

In the traction battery pack according to the embodiment of the invention, optionally, a backflow prevention element for preventing the backflow of the gas in the smoke discharge channel is arranged in the exhaust port.

In the traction battery pack according to the embodiment of the invention, optionally, the backflow prevention element comprises fireproof cotton.

In the traction battery pack according to the embodiment of the invention, optionally, the cell heat-insulating element comprises at least one of an aerogel sheet, a square frame internally provided with a heat-insulating material, and a ceramic composite heat-insulating pad.

In the traction battery pack according to the embodiment of the invention, optionally, the module heat-insulating element comprises at least one of a mica sheet and a ceramic composite heat-insulating pad.

In the traction battery pack according to the embodiment of the invention, optionally, the top assembly comprises a plurality of top heat-insulating elements corresponding to the plurality of battery modules respectively.

In the traction battery pack according to the embodiment of the invention, optionally, the top assembly comprises a shared top heat-insulating element covering the plurality of battery modules.

In the traction battery pack according to the embodiment of the invention, optionally, an arrangement direction of cells in each of the battery modules is substantially perpendicular to the module arrangement direction.

In the traction battery pack according to the embodiment of the invention, optionally, the smoke discharge channel is arranged on one side of the side beam provided with the exhaust ports that is opposite to the battery modules.

In the traction battery pack according to the embodiment of the invention, optionally, the smoke discharge channel is filled with a filling material capable of reducing an effective space in the smoke discharge channel according to requirements.

In the traction battery pack according to the embodiment of the invention, optionally, the filling material comprises a foaming material.

In the traction battery pack according to the embodiment of the invention, optionally, the traction battery pack further comprises a casing, wherein the at least one battery pack assembly comprises two battery pack assemblies arranged side-by-side in the casing in the direction perpendicular to the module arrangement direction, and the smoke discharge channel of each of the battery pack assemblies is arranged between a sidewall of the casing and the side beam provided with the exhaust ports.

### Brief Description of the Drawings

The invention will be further described in detail below in conjunction with the drawings and specific embodiments. However, those skilled in the art would appreciate that the drawings are drawn merely for the purpose of illustrating the specific embodiments and therefore should not be taken as limiting the scope of the invention. In addition, unless otherwise specified, the drawings are merely intended to be conceptually illustrative of the constitution or construction of the described objects and may include exaggerated representations, and the drawings are not necessarily drawn to scale. In addition, in different drawings, the same reference numerals denote the same or substantially the same components.
FIG. 1 shows a perspective exploded schematic view of a traction battery pack assembly comprising a battery module array and a corresponding heat-insulating assembly according to an embodiment of the invention.
FIG. 2 schematically shows an arrangement of two adjacent single cells and a heat-insulating element between the two adjacent single cells in the traction battery pack assembly shown in FIG. 1.
FIG. 3 shows a schematic perspective assembly diagram of a traction battery pack comprising two traction battery pack assemblies basically the same as the traction battery pack assembly shown in FIG. 1 according to an embodiment of the invention.

### Detailed Description of Embodiments

Some embodiments of the invention will be described in more detail below with reference to the drawings. Unless clearly defined otherwise herein, scientific and technical terms used herein have the meanings commonly understood by those skilled in the art.

Orientation terms such as "top", "bottom", "front" and "rear" referred to herein are defined with respect to the directions in the drawings, and the orientation terms are relative concepts and therefore may vary depending on their different locations and different practical positions. Therefore, these or other orientation terms should not be construed as limiting terms.

The use of "comprising" or "having" and variations thereof herein are meant to encompass the items listed thereafter and equivalents thereof as well as additional items. The term "or" and "alternatively" are not meant to be exclusive and refers to at least one of the referenced items being present and includes instances in which a combination of the referenced items may be present. The term "and/or" includes any and all combinations of one or more of the referenced items. Reference to "some embodiments", and so forth, here means that a particular element (e.g., feature, structure, and/or characteristic) described in connection with the invention is included in at least one embodiment described in the description, and may or may not be present in other embodiments. In addition, it should be understood that the inventive elements may be combined in any suitable way.

An aspect of the invention relates to a traction battery pack for a vehicle, in which heat-insulating elements are arranged between adjacent single cells and between adjacent battery modules, and each battery module is enclosed in one independent module sub-compartment, so that each module sub-compartment communicates with a smoke discharge channel only through a dedicated exhaust port. In addition, the smoke discharge channel communicates with the outside of the battery pack through a valve, so as to discharge the gas from the smoke discharge channel to the outside of the battery pack under a certain condition. This design can effectively prevent thermal diffusion between cells and between modules.

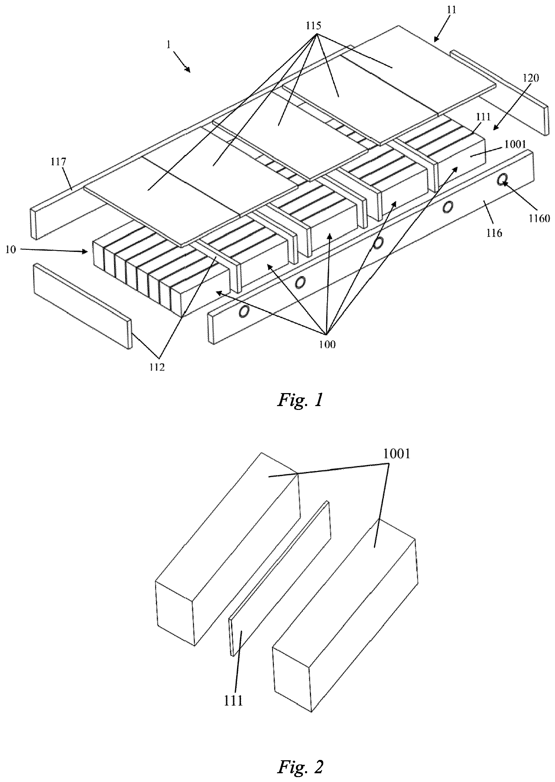

As shown in FIG. 1, an exemplary traction battery pack assembly 1 comprises a battery module array 10 formed by arranging a plurality of battery modules 100 in a certain direction, and a heat-insulating assembly 11 for preventing thermal diffusion. Each of the battery modules 100 comprises a plurality of single cells 1001. In the illustrated embodiment, the battery module array 10 is a single-row array formed by arranging a plurality of battery modules 100 in a row, and the arrangement direction (module arrangement direction) of the plurality of battery modules 100 is substantially perpendicular to an arrangement direction of the plurality of single cells 1001 in each battery module 100. As shown more clearly in FIG. 2, a heat-insulating element (cell heat-insulating element) 111 is arranged between every two adjacent single cells 1001. In addition, heat-insulating elements (module heat-insulating elements) 112 are arranged on two sides of each battery module 100 in the module arrangement direction, and a top assembly 115 and a bottom assembly (not shown) are arranged at the top and bottom of the plurality of battery modules 100 respectively. Side beams 116 and 117 are provided on two opposite sides of the battery module array 10 respectively in a direction perpendicular to the module arrangement direction, and the side beams 116 and 117 extend substantially parallel to the module arrangement direction.

The module heat-insulating elements 112, the top assembly 115, the bottom assembly and the side beams 116, 117 are arranged to enclose each of the battery modules 100 in one independent module sub-compartment 120, so that each module sub-compartment 120 is independent of other module sub-compartments 120, thereby preventing direct space communication and/or direct gas communication between the module sub-compartments 120, so as to reduce or prevent gas diffusion and/or thermal diffusion between different battery modules 100.

One of the side beam 116 and the side beam 117 is provided with a plurality of exhaust ports corresponding to the plurality of module sub-compartments 120 respectively, and a smoke discharge channel (not shown in FIG. 1) is arranged on the other side of the side beam that is opposite to the module sub-compartments 120, so that each module sub-compartment may communicate with the smoke discharge channel through the plurality of exhaust ports. The smoke discharge channel may communicate with the outside of the traction battery pack through a valve, such as an explosion-proof valve (not shown), so as to discharge the gas from the smoke discharge channel to the outside of the battery pack through the valve under a set condition of the valve. In the embodiment shown in FIG. 1, the side beam 116 is provided with a plurality of exhaust ports 1160 which respectively communicate with the plurality of module sub-compartments located on one side of the side beam 116 and the smoke discharge channel located on the other side of the side beam 116. A backflow prevention element (not shown) is arranged in each exhaust port 1160, and is configured to be capable of allowing a high-temperature gas in a module sub-compartment in which thermal runaway occurs to be discharged to the smoke discharge channel, and effectively preventing the gas in the smoke discharge channel from flowing back to other module sub-compartments in which thermal runaway does not occur. In some embodiments, the backflow prevention element is made of a high-temperature resistant porous material capable of withstanding a high temperature of 600°C or above, such as fireproof cotton. In some embodiments, each exhaust port 1160 is filled with fireproof cotton to achieve the function.

The number of heat-insulating elements 112 arranged between adjacent battery modules 100 is not limited, and an appropriate number may be selected according to specific requirements. For example, the same number of (one or more) heat-insulating elements 112 may be arranged between every two adjacent battery modules 100, or different numbers of heat-insulating elements 112 may be arranged between adjacent battery modules 100 in different positions. In the illustrated embodiment, one heat-insulating element 112 is arranged between two pairs of adjacent battery modules 100 which are respectively close to two ends in the module arrangement direction, while two separated heat-insulating elements 112 are arranged between the other pairs of adjacent battery modules 100 (adjacent battery module pairs at a middle position in the module arrangement direction).

The top assembly 115 may be made of a heat-insulating and fireproof material, and may comprise a plurality of top covers corresponding to the plurality of battery modules 100 respectively, or a shared top cover shared by the plurality of battery modules 100. In the illustrated embodiment, the top assembly 115 comprises a plurality of heat-insulating top covers respectively covering the tops of the plurality of battery modules 100, and a material of the heat-insulating top cover may be the same as or different from that of the module heat-insulating element 112. The use of the heat-insulating top cover made of a heat-insulating and fireproof material makes it possible to, when a cell in a module sub-compartment is subjected to thermal runaway, effectively prevent a high-temperature mixture and flame sprayed from the cell from penetrating through the heat-insulating top cover allowing oxygen to enter a diffusion process, while preventing the high-temperature gas from spreading to other modules from above. The bottom assembly may be any substrate or base or the like on which it is suitable to mount the battery module array 10 and the heat-insulating assembly 11. The bottom assembly may be a bottom of a battery pack housing casing directly, or may be a battery pack mounting substrate mounted at the bottom.

The cell heat-insulating element 111 may be any suitable element with low thermal conductivity and high resilience, and can not only absorb thermal expansion and contraction of the cell, but can also effectively delay or prevent the propagation of heat from the single cell in which thermal runaway occurs to an adjacent cell. In some embodiments, the cell heat-insulating element 111 comprises members formed of materials with low thermal conductivity, high resilience, flame retardancy and aging resistance, such as an aerogel sheet, a square frame internally provided with a heat-insulating material (a gasket formed of an isolation material is mounted in the plastic square frame, for example), and a ceramic composite heat-insulating pad. The module heat-insulating element 112 may be any suitable element with heat-insulating and fire prevention functions. For example, the module heat-insulating element may comprise a heat-insulating material with good heat-insulating performance and high strength, and can withstand an impact of a high-temperature gas. In some embodiments, the module heat-insulating element 112 comprises at least one of a mica sheet and a ceramic composite heat-insulating pad. The side beams 116 and 117 may be heat-insulating elements like the module heat-insulating element 112, or may be made of a heat conducting material. For example, in some embodiments, the side beams 116 and/or 117 may be made of an aluminum alloy material.

One or more battery pack assemblies 1 may be arranged in the battery pack housing casing in a suitable way to form a traction battery pack together with other cooperating elements.

In some embodiments, since the front, rear, left and right sides (or three sides thereof) of each battery module have heat-insulating and fireproof materials, and a module sub-compartment formed by the sides can separate the battery modules from each other in space, thereby avoiding the influence of high-temperature ejecta and flame generated by ejecta combustion on the surrounding modules. The module sub-compartment communicates with the smoke discharge channel through the exhaust port. Once thermal runaway occurs to a cell, the high-temperature gas is limited inside the module sub-compartment, then enters the smoke discharge channel through the exhaust port, and is then discharged to the outside of the battery pack through the explosion-proof valve on the casing. In some embodiments, to make the explosion-proof valve reach a set pressure relief condition as soon as possible, the smoke discharge channel may be filled with a filling material which may reduce an effective space in the smoke discharge channel according to requirements. The filling material may be a foaming material. The high-temperature gas in the smoke discharge channel can be ejected and discharged to the outside of the battery pack as soon as possible by using the filling material to reduce the effective space in the channel.

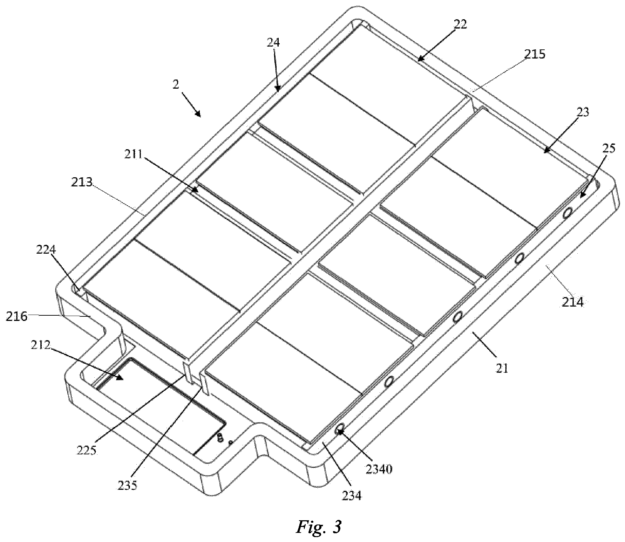

FIG. 3 shows an exemplary traction battery pack 2 according to one embodiment of the invention, which may comprise a combination of at least one (for example, two or more) battery pack assembly that is the same as or similar to the battery pack assembly 1 shown in FIG. 1. As shown in FIG. 3, the traction battery pack 2 comprises a housing casing 21, and the casing 21 has a battery module space 211 and a control element space 212 defined therein. A battery pack assembly 22 and a battery pack assembly 23, which are substantially the same as the battery pack assembly 1 shown in FIG. 1, are arranged side-by-side in the battery module space 211 in the direction perpendicular to the module arrangement direction, that is, battery modules (hidden by top covers thereof and not visible in FIG. 3) of the two battery pack assemblies are arranged in two rows in the battery module space 211, and corresponding heat-insulating assemblies are arranged for each row of battery modules in a manner similar to that described above for the battery pack assembly 1.

A side beam 224 of the battery pack assembly 22 that is adjacent to a sidewall 213 of the casing 21 is provided with exhaust ports (not visible in the figure), and a smoke discharge channel 24 is formed between the side beam 224 and the sidewall 213. A side beam 234 of the battery pack assembly 23 that is adjacent to a sidewall 214 of the casing 21 is provided with exhaust ports 2340, and a smoke discharge channel 25 is formed between the side beam 234 and the sidewall 214. The side beam 224 and the side beam 234 may respectively extend to form a relatively sealed joint with end walls 215 and 216 of the casing 21, so as to separate the smoke discharge channels 24 and 25 from other parts in the battery module space 211 and the control element space 212. At least one of the side beams 225 and 235 of the battery pack assembly 22 and the battery pack assembly 23 that are adjacent to each other may be a heat-insulating element (for example, which may have the same structure as that of the module heat-insulating element 112 described above), so as to provide a heat-insulating function between the battery pack assembly 22 and the battery pack assembly 23. The side beams 225 and 235 may be separated from each other to form a certain space interval therebetween. Other configurations of the battery pack assemblies 22 and 23 may be the same as those of the above-mentioned battery pack assembly 1, and will not be described in detail herein.

Various control elements, high-voltage devices, etc. for controlling the battery pack assemblies may be mounted in the control element space 212. In the illustrated embodiment, the control element space 212 is located at one end of the battery pack assemblies 22 and 23 in the module arrangement direction of the battery pack assembly 22 or 23.

In addition, a cooling structure, such as a water-cooled circulation channel, may be integrated in the bottom assembly of the battery pack (for example, the battery pack mounting substrate), so that water circulation may be started before thermal runaway is imminent, to cool a local overheating area as quickly as possible to avoid thermal runaway. Real-time monitoring may be performed by a thermal runaway sensor mounted on the side beam. When it is detected that thermal runaway is likely to occur, a battery management system (BMS) uploads information to vehicle control software, and activates a battery water pump to the maximum power, so as to quickly transfer the heat near a failed cell to other locations to achieve effective cooling.

The foregoing specific embodiments are provided for a more thorough and comprehensive understanding of the disclosure of the invention, but the invention is not limited to these specific embodiments. Those skilled in the art should understand that various modifications, equivalent replacements, changes and the like can also be made to the invention, and should be included in the scope of protection of the present invention as long as these changes do not depart from the spirit of the invention.

## Claims

1. A traction battery pack, comprising at least one battery pack assembly, each comprising:
a battery module array, which comprises a plurality of battery modules arranged in a module arrangement direction, each of the battery modules comprising a plurality of cells, cell heat-insulating elements being arranged between adjacent cells of the plurality of cells, and module heat-insulating elements being arranged on two sides of each of the battery modules in the module arrangement direction;
a top assembly and a bottom assembly located at the top and bottom of the plurality of battery modules, respectively;
side beams arranged on two sides of the battery module array respectively in a direction perpendicular to the module arrangement direction, the side beams extending substantially parallel to the module arrangement direction; and
a smoke discharge channel, which communicates with the outside of the traction battery pack through a valve, the valve being capable of discharging a gas in the smoke discharge channel to the outside under a set condition,
wherein the module heat-insulating elements, the top assembly, the bottom assembly and the side beams are arranged to enclose each of the battery modules in one module sub-compartment, and at least one of the side beams is provided with exhaust ports each communicating with the smoke discharge channel and a respective module sub-compartment.

2. The traction battery pack according to claim 1, wherein a backflow prevention element is arranged in the exhaust port, and is configured to allow a gas in a module sub-compartment in which thermal runaway occurs to be discharged to the smoke discharge channel, and to prevent the gas in the smoke discharge channel from flowing back to a module sub-compartment in which thermal runaway does not occur.

3. The traction battery pack according to claim 2, wherein the backflow prevention element comprises fireproof cotton.

4. The traction battery pack according to any one of claims 1 to 3, wherein the cell heat-insulating element comprises at least one of an aerogel sheet, a square frame internally provided with a heat-insulating material, and a ceramic composite heat-insulating pad.

5. The traction battery pack according to any one of claims 1 to 4, wherein the module heat-insulating element comprises at least one of a mica sheet and a ceramic composite heat-insulating pad.

6. The traction battery pack according to any one of claims 1 to 5, wherein the top assembly comprises a plurality of top heat-insulating elements corresponding to the plurality of battery modules respectively.

7. The traction battery pack according to any one of claims 1 to 6, wherein the top assembly comprises a shared top heat-insulating element covering the plurality of battery modules.

8. The traction battery pack according to any one of claims 1 to 7, wherein an arrangement direction of cells in each of the battery modules is substantially perpendicular to the module arrangement direction.

9. The traction battery pack according to any one of claims 1 to 8, wherein the smoke discharge channel is arranged on one side of the side beam provided with the exhaust ports that is opposite to the battery modules.

10. The traction battery pack according to any one of claims 1 to 9, wherein the smoke discharge channel is filled with a filling material capable of reducing an effective space in the smoke discharge channel according to requirements.

11. The traction battery pack according to claim 10, wherein the filling material comprises a foaming material.

12. The traction battery pack according to any one of claims 1 to 11, further comprising a casing, wherein the at least one battery pack assembly comprises two battery pack assemblies arranged side-by-side in the casing in the direction perpendicular to the module arrangement direction, and the smoke discharge channel of each of the battery pack assemblies is arranged between a sidewall of the casing and the side beam provided with the exhaust ports.
